**Europäisches Patentamt**

(19) **European Patent Office**

**Office européen des brevets**

(11) Numéro de publication: **0 275 787**
**B1**

(12) ## FASCICULE DE BREVET EUROPEEN

(45) Date de publication du fascicule du brevet:
08.08.90

(51) Int. Cl.⁵: **B60T 7/20**, B64F 1/22

(21) Numéro de dépôt: 87402974.7

(22) Date de dépôt: 23.12.87

(54) Dispositif de freinage au remorquage d'un avion au sol.

(30) Priorité: 26.12.86 FR 8618199

(43) Date de publication de la demande:
27.07.88 Bulletin 88/30

(45) Mention de la délivrance du brevet:
08.08.90 Bulletin 90/32

(84) Etats contractants désignés:
GB SE

(56) Documents cités:
DE-A- 1 506 001
FR-A- 951 343
FR-A- 2 274 504
US-A- 2 365 557
US-A- 4 007 890
US-A- 4 084 859

(73) Titulaire: MESSIER-HISPANO-BUGATTI, 5 rue Louis
Lejeune, F-92120 Montrouge(FR)

(72) Inventeur: Guichard, Jean, 15 rue Louis Blanc,
F-92250 La Garenne Colombes(FR)
Inventeur: Favre, Christian, 2 square Roger Salengro,
F-91300 Massy(FR)

(74) Mandataire: Fruchard, Guy et al, CABINET
BOETTCHER 23, rue la Boétie, F-75008 Paris(FR)

## Description

La présente invention concerne un dispositif de freinage au remorquage d'un avion au sol entraîné par un organe tracteur automobile selon le preambule de la revendication 1.

On sait qu'en raison du développement croissant des transports aériens, la taille de aéroports a considérablement augmenté et les aires de stationnement des avions sont parfois très éloignées du point où l'avion doit être amené avant un vol pour l'embarquement des passagers. Pour amener un avion de l'aire de stationnement au point d'embarquement, on utilise de façon habituelle un véhicule tracteur automobile auquel l'avion est relié mécaniquement par une barre de remorquage, généralement fixée au train avant de l'avion.

Un problème se pose, quand on cherche à réaliser un véhicule tracteur rapide en vue de minimaliser les temps de remorquage, qui est de mettre au point un dispositif de freinage permettant de provoquer un arrêt brutal d'un avion lourd par rapport au véhicule tracteur, sans qu'il en résulte de dommage pour le véhicule tracteur ou pour l'avion.

Le brevet américain 4 007 890 décrit un système de freinage au remorquage d'un avion au sol entraîné par un véhicule tracteur, dans lequel le véhicule tracteur est équipé de moyens de freinage commandés par un organe de commande de freinage qui est relié au circuit de freinage automatique de l'avion pour commander les freins de roues de l'avion au remorquage. Cette solution présente l'inconvénient d'être coûteuse en ce qu'elle implique la présence d'un pilote à bord de l'avion pour la mise en route du groupe auxiliaire de puissance de l'avion, nécessaire à l'alimentation électrique des pompes du circuit hydraulique de freinage.

Un but de la présente invention est de proposer un dispositif de freinage au remorquage d'un avion au sol qui ne présente pas cet inconvénient.

En vue de la réalisation de ce but, on prévoit un dispositif de freinage au remorquage d'un avion au sol entraîné par un véhicule tracteur relié mécaniquement à l'avion et équipé de moyens de freinage commandés par un organe de commande de freinage qui est relié à un circuit de freinage de l'avion pour commander des freins de roues de l'avion au remorquage, caractérisé en ce que l'avion comporte un circuit de freinage de parking comprenant un accumulateur hydraulique relié aux freins de roues par l'intermédiaire d'un organe de freinage et que l'organe de commande de freinage du véhicule tracteur est relié à l'organe de freinage en parallèle avec une manette de commande du circuit de freinage de parking. Cette solution présente l'intérêt d'être peu dispendieuse en énergie, de sorte que le véhicule tracteur est à même de fournir l'énergie nécessaire à l'actionnement des freins de roues de l'avion.

Selon une version avantageuse de l'invention, l'organe de freinage de l'avion est un distributeur entraîné par un organe de manœuvre relié à l'organe de commande de freinage du véhicule tracteur par l'intermédiaire d'un comparateur ayant une entrée reliée à un organe d'émission de consigne associé à l'organe de commande de freinage du véhicule tracteur et une entrée reliée à un détecteur de position du distributeur. Ainsi, on obtient aisément une action de freinage de l'avion proportionnée à l'action sur l'organe de commande de freinage du véhicule tracteur.

Selon un mode de réalisation préféré de l'invention, le circuit de freinage de l'avion comporte une pompe entraînée par un moteur électrique relié au véhicule tracteur. Ainsi on s'assure que le circuit de freinage de l'avion reste constamment alimenté à une pression suffisante pour obtenir un freinage efficace.

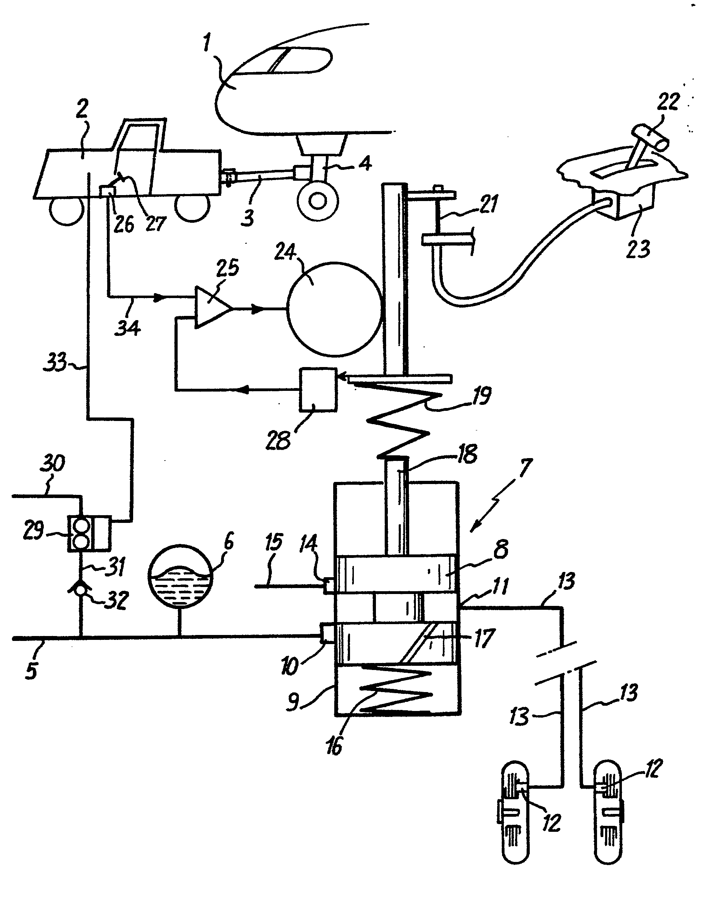

D'autres caractéristiques et avantages de l'invention apparaîtront encore à la lecture de la description qui suit d'un mode de réalisation particulier non limitatif de l'invention en liaison avec la figure unique ci-jointe qui illustre l'invention de façon schématique.

En référence à la figure, le dispositif selon l'invention est destiné à assurer le freinage au remorquage d'un avion 1 au sol entraîné par un véhicule tracteur 2 relié mécaniquement à l'avion 1, par exemple au moyen d'une barre de remorquage 3 convenablement fixée au train avant 4 de l'avion 1.

Dans le mode de réalisation préféré illustré, le dispositif de freinage au remorquage est associé au circuit de freinage de parking de l'avion. Ce circuit de freinage de parking comporte une ligne d'alimentation 5 reliée à une pompe d'alimentation non représentée du circuit de freinage lorsque les moteurs de l'avion sont en service. Un accumulateur hydraulique 6 est relié à la canalisation d'alimentation 5 et permet d'exécuter un certain nombre de manoeuvres de freinage lorsque les pompes d'alimentation habituelles sont hors service. Le circuit de freinage de parking comporte en outre de façon classique un organe de freinage, généralement désigné en 7, formé par un distributeur comportant un piston différentiel 8 à deux étages coulissant dans un boîtier 9 ayant une entrée 10 reliée à la canalisation d'alimentation 5, une sortie 11 reliée à des freins de roues 12 par des tronçons de canalisation 13 et une seconde sortie 14 reliée à une canalisation de retour 15. Le piston 8 est soumis à l'action d'un ressort 16 agissant dans le sens d'une coupure de l'alimentation en fluide de freinage et d'une liaison entre le tronçon de canalisation 11 et la canalisation de retour 15. Un orifice calibré 17 relie l'espace intermédiaire du piston différentiel 8 avec la face extrême tournée vers le ressort de rappel 16. Le piston 8 est relié à une tige de piston 18 sur laquelle prend appui l'extrémité d'un ressort de manoeuvre 19 lui-même plus ou moins comprimé par une tige de manoeuvre 20 entraînée par un câble de manoeuvre 21 associé à une manette de commande de frein de parking 22 par l'intermédiaire d'un boîtier de commande 23.

Selon le mode de réalisation préféré de l'invention, un moteur électrique 24, par exemple un moteur électrique pas à pas est associé à la tige de manoeuvre 20 pour assurer le déplacement de celle-ci en parallèle au câble 21. Le moteur 24 est entraîné en rotation en réponse à des signaux provenant d'un comparateur 25 ayant une première entrée reliée par une ligne 34 à un organe d'émission de consigne 26 associé à la pédale de freinage 27 du véhicule tracteur 2 et une seconde entrée reliée à un détecteur de position 28 de la tige de manoeuvre 20, par exemple un détecteur de position potentiométrique associé à un curseur porté par la tige de manoeuvre 20.

De préférence, on prévoit également selon l'invention une pompe électrique 29 ayant un orifice d'admission relié à une réserve de fluide de freinage par l'intermédiaire d'un tronçon de canalisation 30 et un orifice de sortie relié à la canalisation d'alimentation 5 par l'intermédiaire d'un tronçon de canalisation 31 sur lequel est monté un clapet anti-retour 32. La pompe électrique 29 est reliée au véhicule tracteur 2 par une ligne d'alimentation électrique 33.

Lorsque l'avion est en service, le circuit de freinage de parking est utilisé normalement en manoeuvrant la poignée de freinage de parking 22. Lorsque l'on souhaite remorquer l'avion au moyen d'un tracteur 2, on branche la ligne d'alimentation électrique 33 et l'on relie la première entrée du comparateur 25 à l'organe d'émission de consigne 26 du tracteur 2, puis on déplace la manette de commande 22 vers la position de déblocage des freins. Dans cette position, le distributeur 7 du circuit de freins de parking se trouve commandé par les signaux du comparateur 25 agissant sur le second moteur 24.

Bien entendu l'invention n'est pas limitée au mode de réalisation décrit et on peut y apporter des variantes de réalisation qui apparaîtront à l'homme de métier. En particulier, au lieu d'utiliser le distributeur du circuit de freinage de parking de l'avion, on peut agir sur un autre organe de freinage du circuit de freinage de l'avion ou prévoir de disposer un organe de freinage particulier dans ce circuit de freinage.

On peut également prévoir de remplacer la liaison électrique décrite entre le tracteur et l'avion par une liaison hydraulique, le circuit de freinage du tracteur 2 étant alors directement associé au circuit de freinage de l'avion. Une telle solution suppose toutefois que des précautions soient prises pour assurer une pureté suffisante du fluide de freinage utilisé sur le tracteur afin de ne pas risquer de polluer le circuit de freinage de l'avion lors d'une utilisation du dispositif de freinage au remorquage.

Bien que selon l'invention il soit préféré d'incorporer une pompe électrique 29, qui peut être de faible puissance, dans le circuit de freinage de l'avion afin d'assurer une pression suffisante du fluide de freinage dans ce circuit, on peut également prévoir d'utiliser les pompes d'alimentation habituelles de l'avion en entraînant celles-ci au moyen du groupe auxiliaire de puissance de l'avion.

## Revendications

1. Dispositif de freinage au remorquage d'un avion (1) au sol entraîné par un véhicule tracteur (2) relié mécaniquement à l'avion et équipé de moyens de freinage commandés par un organe de commande de freinage (27) qui est relié à un circuit de freinage de l'avion pour commander des freins de roues (12) de l'avion au remorquage, caractérisé en ce que l'avion (1) comporte un circuit de freinage de parking comprenant un accumulateur hydraulique (6) relié aux freins de roues (12) par l'intermédiaire d'un organe de freinage (7) et en ce que l'organe de commande de freinage (27) du véhicule tracteur (2) est relié à l'organe de freinage (7) en parallèle avec une manette de commande (22) du circuit de freinage de parking.

2. Dispositif de freinage selon la revendication 1, caractérisé en ce que l'organe de freinage de l'avion est un distributeur (7) entraîné par un organe de manoeuvre (24) relié à l'organe de commande de freinage (27) du véhicule tracteur (2) par l'intermédiaire d'un comparateur (25) ayant une entrée reliée à un organe d'émission de consigne (26) associé à l'organe de commande de freinage (27) du véhicule tracteur (2) et une entrée reliée à un détecteur de position (28) du distributeur (7).

3. Dispositif de freinage selon une des revendications 1 et 2, caractérisé en ce que le circuit de freinage de parking comporte une pompe électrique (29) reliée à l'accumulateur hydraulique (6) et ayant un câble d'alimentation (3) relié au véhicule tracteur.

## Patentansprüche

1. Bremsvorrichtung zum Bremsen eines Flugzeugs (1) beim Abschleppen auf dem Boden durch eine Zugmaschine (2), die mit dem Flugzeug mechanisch verbunden und mit Bremsmitteln ausgestattet ist, welche über ein Bremsbetätigungsorgan (27) betätigt werden, das mit einem Bremskreis des Flugzeugs zur Betätigung der Radbremsen (12) des abgeschleppten Flugzeugs verbunden ist, dadurch gekennzeichnet, daß das Flugzeug (1) einen Parkbremskreis mit einem über ein Bremsorgan (7) mit den Radbremsen (12) verbundenen hydraulischen Druckspeicher (6) umfaßt, und daß das Bremsbetätigungsorgan (27) der Zugmaschine (2) mit dem Bremsorgan (7) parallel zu einem Handsteuerhebel (22) des Parkbremskreises verbunden ist.

2. Bremsvorrichtung nach Anspruch 1, dadurch gekennzeichnet, daß das Bremsorgan des Flugzeugs ein Wegeventil (7) ist, welches durch ein Betätigungsorgan (24) betätigt wird, das mit dem Bremsbetätigungsorgan (27) der Zugmaschine (2) über einen Vergleicher (25) verbunden ist, welcher einen Eingang hat, der an ein mit dem Bremsbetätigungsorgan (27) der Zugmaschine (2) verbundenes Befehlsausgabeorgan (26) angeschlossen ist und einen Eingang, der an einen Positionsgeber (28) des Wegeventils (7) angeschlossen ist.

3. Bremsvorrichtung nach einem der Ansprüche 1 und 2, dadurch gekennzeichnet, daß der Parkbremskreis eine elektrische Pumpe (29) umfaßt, die an den hydraulischen Druckspeicher (6) angeschlossen ist und eine mit der Zugmaschine verbundene Versorgungsleitung (33) hat.

## Claims

1. A braking system for use when towing an aircraft (1) on the ground by means of a tractor vehicle (2) which is mechanically linked to the aircraft and which is equipped with brake means under the control of a brake control member (27) which is connected to a braking circuit of the aircraft for controlling wheel brakes (12) of the aircraft when towing characterized in that the aircraft (1) comprises a parking brake circuit including a hydraulic accumulator (6) connected to said wheel brakes (12) through a braking member (7), and in that said brake control member (27) of said tractor vehicle (2) is connected to said braking member (7) in parallel with a control member (22) of the parking brake circuit.

2. A braking system according to claim 2 characterized in that said braking member of said aircraft is a slide valve (7) driven by an operating member (24) connected to the brake control member (27) of the tractor vehicle via a comparator (25) having an input connected to reference value generator (26) associated with the tractor vehicle brake control member (27) and an input connected to a position detector (28) for detecting the position of the slide valve.

3. A braking system according to claim 1 or claim 2, characterized in that the parking brake circuit includes an electric pump (29) connected to said hydraulic accumulator (6) and having a supply cable (33) connected to said tractor vehicle.